# EUROPEAN PATENT SPECIFICATION

(11) **EP 4 333 178 B1**
(45) Date of publication and mention of the grant of the patent: **27.05.2026**
(21) Application number: 22795267.8
(22) Date of filing: 28.02.2022
(51) Int. Cl.: H01M 50/242, H01M 50/249, H01M 50/291

(54) **ONBOARD BATTERY CASE STRUCTURE**
BORDBATTERIEGEHÄUSESTRUKTUR
STRUCTURE DE BOÎTIER DE BATTERIE EMBARQUÉE

(30) Priority: 29.04.2021 JP 2021076915
(43) Date of publication of application: 06.03.2024
(73) Proprietor: Aisin Keikinzoku Co., Ltd., Toyama 934-8588 (JP)
(72) Inventor: FUTAZUKA Shigeru, Imizu-shi, Toyama 934-8588 (JP); TAKANAMI Yuta, Imizu-shi, Toyama 934-8588 (JP); KUGUE Takefumi, Imizu-shi, Toyama 934-8588 (JP)
(74) Representative: Wunderlich & Heim Patentanwälte PartG mbB
(86) International application number: PCT/JP2022/008195
(87) International publication number: WO 2022/230344

(56) References cited:
- EP-A1- 2 741 343
- CN-U- 208 111 536
- CN-U- 210 110 876
- CN-U- 210 723 281
- CN-U- 211 828 886
- JP-A- 2018 202 946
- JP-A- 2020 098 723
- KR-A- 20200 104 515
- US-A1- 2008 173 489
- US-A1- 2017 025 655
- US-A1- 2020 207 221

## Description

### TECHNICAL FIELD

The present invention relates to a battery case structure used for mounting a battery module serving as a drive source in a vehicle.

### BACKGROUND ART

Battery modules including rechargeable batteries as drive sources are mounted in electric vehicles, hybrid vehicles, and the like.

For example, a mounting structure that mounts battery modules under a floor of a vehicle, other than a rear side and a front side of the vehicle, has also been considered.

While excellent protection of the battery modules from an external impact is required for such a battery module mounting structure, there is also a demand for reuse of resources in recent years, especially when a vehicle is scrapped.

For example, in a structure including materials difficult to be separated due to combinations of different materials (hereafter, referred to as dissimilar materials), mixture of different materials is inevitable during recycling, resulting in deterioration of resource values, accordingly, which causes a problem for excellent reusability of resources.

Patent Document 1 discloses a structure that includes a potting material and a blanket for fixing a battery module including rechargeable batteries inside a case, and facilitates removing of the battery module.

This structure is purposed to enhance disassembly performance of the battery module and does not take account of reuse of the potting material and the blanket that bind the battery module; therefore, it is required to realize further effective utilization of resources.

### RELATED-ART DOCUMENT

### PATENT DOCUMENT

Patent Document 1: JP-A-2011-523168

Moreover, prior art documents US 2008/173489, EP 2 741 343 and US 2017/025655 show different battery tray structures having advantages and disadvantages.

### SUMMARY OF THE INVENTION

### TECHNICAL PROBLEM

The invention has an object to provide an in-vehicle battery case structure having an excellent protection effect from an external impact and suppressing deterioration of resource values at the time of recycling.

### SOLUTION TO PROBLEM

An in-vehicle battery case structure according to the invention includes the features of claim 1, such as: a battery case configured to be mounted in a vehicle; and a plurality of strength members fastened to an inner side of the battery case, each of the strength members being configured to hold a battery module, the strength members being detachably fastened to the battery case, and being configured by a plurality of components that are joined through joining without dissimilar materials.

In this case, the battery case is a case that accommodates battery module including so-called repetitively rechargeable batteries and control devices thereof, and this battery case is mounted under the floor of a vehicle, or the like, for example.

For convenience of explanation, a direction in which an external impact is likely to act is represented as the left-right direction, and this direction does not limit the mounting direction in the vehicle; and the strength members receive the input load, and thereby to protect the battery module.

When a plurality of battery modules is fixed in the battery case and is then mounted in the vehicle, there can be considered various modes for the fixing structure of the battery modules; and in the invention, since the battery module is held by the strength members detachably fastened to the battery case, the structure becomes compact.

Herein, the joining without dissimilar materials denotes joining without using a filler material different from a base material of welding rods, for example.

Specific examples of the joining without dissimilar materials may include friction stir welding and laser welding.

In this manner, when the base materials are directly joined to each other, no dissimilar materials are mixed during the joining; therefore, it is possible to reuse the resources without disassembling the joint parts.

In the invention, the battery case includes: a frame body configured by a left frame, a right frame, a front frame, and a rear frame; and a panel body disposed on a bottom of the frame body, each of the strength members includes: a protective component and terminal components that are joined to both ends of the protective component through joining without dissimilar materials, and are fastened to the left frame and the right frame by the terminal components, and the battery module is fixed to the protective component with bolts.

In light of recycling efficiency, it is ideal that the frame body of the battery case and the strength members should be made of the same material; and in the invention, in order to improve the protection effect of the battery module while realizing a compact structure of the battery case, the strength members and the frame body that directly hold the battery module are manufactured in accordance with each purpose thereof, and the strength members are removably fastened so as to improve the recycle efficiency.

Accordingly, the strength members can be easily collected by removing the bolts and nuts.

In addition, the battery case includes the panel body disposed on the bottom of the frame body, and in light of the waterproof performance, the frame body and the panel body may be joined with rivets and or adhesive; and in light of excellent reuse of resources, the left and right frames and the front and rear frames may be joined into the frame body through joining without dissimilar materials.

By configuring the strength members to have a structure in which the protective component holding the battery module is joined to the terminal components at both ends of the protective component through joining without dissimilar materials, it is possible to realize the structure that allows the input loads from the left and right frames to be easily transmitted to the terminal component, while the input loads are distributed to the protective component; accordingly, it is possible to enhance the protection effect of the battery module.

In addition, the protective component is formed by joining a plurality of parts through joining without dissimilar materials.

In the invention, the panel body may include a plurality of brackets, and the protective component may be fastened to the brackets with bolts.

With this configuration, it is possible to distribute the load applied to the strength members through the entire battery case via the panel body at the bottom of the case.

Furthermore, it is possible to facilitate disassembly of the strength members from the panel body.

**In** the invention, the in-vehicle battery case structure may comprise guard members at both ends in the stacking direction of the battery cells provided in the battery module, and the guard members may be fixed to two protective components adjacent in a direction perpendicular to the stacking direction.

Generally, a battery module includes stacked battery cells, and the guard members are arranged at the ends of the battery module and thereby the battery module can be held by the guard members at the both ends at the time of fixing the battery module to the protective component.

**In** the invention, in case that a plurality of battery modules arranged in the front-rear direction in the battery case, two guard members for fixing two battery modules adjacent in the front-rear direction may be fixed to be staggered left and right with respect to the same protective component.

**In** this manner, by fixing the guard members to be staggered left and right with respect to the strength member (protective component) from the front-rear direction, the space for the fixing can be reduced.

When the guard members are fixed so as to sandwich the pair of strength members adjacent in the front-rear direction, the strength members are constrained by the guard members; therefore, the guard members act to suppress the strength members from falling down even if deformation of the frame occurs due to an externally input load.

### ADVANTAGEOUS EFFECTS OF INVENTION

The battery case structure according to the invention is configured to detachably fasten the strength members, which are important components for directly holding the battery modules, to the inner side of the battery case, and configured such that the strength members are j oined through joining without dissimilar materials; accordingly, it is possible to disassemble the strength members at the time of recycling, and reuse the strength members as usable resources as they are.

In addition, it is possible to promote enhancement of the protection effect of the battery module.

### BRIEF DESCRIPTION OF DRAWINGS

FIG. 1 is a perspective view illustrating an example of an in-vehicle battery case structure according to the invention.
FIG. 2 is a perspective view illustrating an example of fastening a strength member.
FIG. 3 is a perspective view illustrating an example of fixing a battery module.
FIG. 4 is an enlarged perspective view illustrating a region A in FIG. 1.
FIG. 5 is an enlarged perspective view illustrating a region B in FIG. 1.
FIG. 6 is an enlarged partial front view illustrating a region C in FIG. 1.
FIG. 7 is an enlarged front view illustrating a region D in FIG. 6.
FIG. 8 is a perspective view illustrating the second embodiment.
FIG. 9 is a perspective view illustrating another example of the battery module.

### DESCRIPTION OF EMBODIMENTS

An example of an in-vehicle battery case structure according to the invention will be described below with reference to the drawings; however, the invention is not limited to this.

For convenience of explanation, the left-right direction is defined as a direction in which an external impact is likely to act; however, the mounting direction of the battery case structure with respect to a vehicle is not limited.

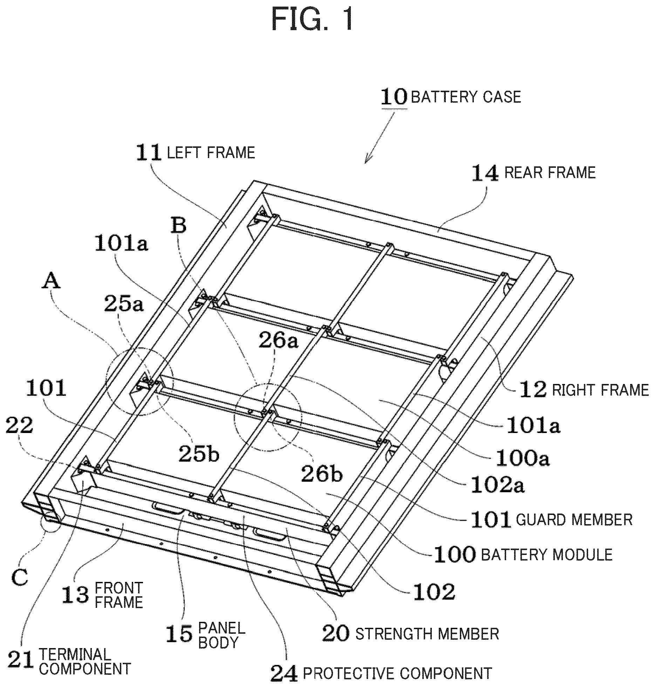

FIG. 1 illustrates an example used in the case in which strength members 20 are fastened to the inside of a battery case 10, and battery modules 100 including rechargeable batteries are fixed to the strength members 20, and this battery case 10 is mounted under the floor of the vehicle.

The battery case 10 has a frame body formed by arranging a left frame 11 and a right frame 12 that are made of an extruded aluminum material to face each other, and also by connecting respective ends in the front-rear direction of these frames to a front frame 13 and a rear frame 14 that are made of an extruded aluminum material.

Strength members 20 described later are fastened to the left and right frames 11, 12.

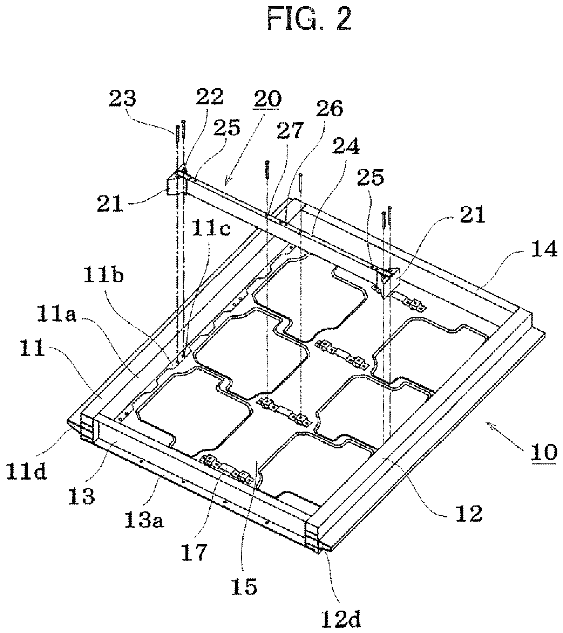

For example, as illustrated in FIG. 2, ribs 11b extending inward from the lower part of an inner wall 11a of the left frame 11 are each formed with fastened holes 11c, used for fastening the strength members 20, with predetermined intervals.

The left and right frames 11, 12 may have respective outer hollows 11d, 12d projecting outward so as to absorb an impact externally applied.

Each frame may have an attachment part to be attached to the vehicle if necessary, and a rear frame 14 may have an attachment part, as with an attachment part 13a disposed at a lower part of the front frame 13, for example.

The connecting method of mutually connecting the frames is not particularly limited; however, if the frames are joined through joining without dissimilar materials, for example, excellent reusability of resources can be attained.

An iron panel body 15 is attached to the bottom of the frame body.

In the present embodiment, the frame body and the panel body are joined together with rivets and an adhesive for the purpose of enhancement of the waterproof performance of the battery case 10.

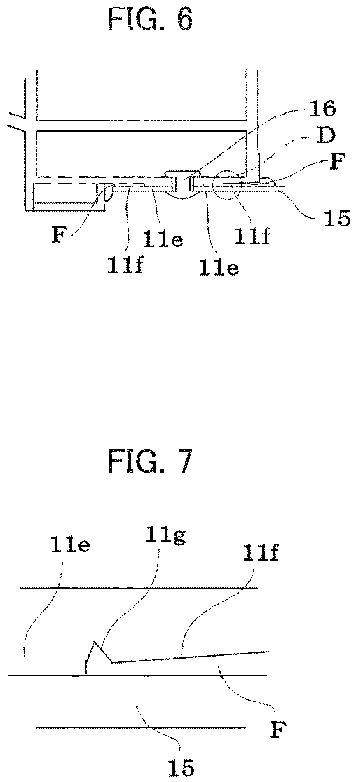

FIG. 6 illustrates an example of being joined to the panel body 15 by using the left frame 11 as an example.

The bottom at which the left frame 11 faces the panel body 15 is formed with a riveted joint 11e pressedly joined to the panel body 15 with a rivet 16 and a joint 11f to the panel body 15, which is sealed via an adhesive F, and excess adhesive protrudes outside.

In general, if the adhesive flow to the riveted joint, a gap is likely to be generated, which adversely affects the waterproof function.

Hence, in the invention, as illustrated in FIG. 7, a slope is formed on the bottom of the frame such that the gap becomes larger toward the outer side to prevent excess adhesive from flowing toward the rivet side; and an inner groove 11g is formed on the rivet side located on the deeper side and thereby to release the excessive adhesive.

This configuration prevents the adhesive from entering the riveted joint 11e.

The present embodiment exemplifies the case in which, as illustrated in FIG. 2, a plurality of brackets 17 are formed with predetermined intervals on the panel body 15, and the strength members are fastened to the brackets 17; and the brackets 17 may be detachably fastened with bolts.

The strength member 20 is formed by joining a plurality of components through joining without dissimilar materials so as to extend in the left-right direction.

As illustrated in FIG. 2, for example, the strength member 20 is formed by joining a pair of terminal components 21, 21 made of aluminum to a protective component 24 made of the same or similar aluminum extruded material through friction stir-welding, and the terminal components 21, 21 are connected to each other via the protective component 24.

Each of the terminal components 21 has fastening holes 22 penetrating through the terminal component in the up-down direction, and the fastening holes can be fastened to fastened holes 11c of the left frame 11 with bolts 23 and nuts (not illustrated), and the other terminal component 21 can be fastened to the right frame 12 in the same manner.

The protective component 24 has a plurality of fixing holes 25, 26, used for fixing the battery module 100, inward of the terminal components 21 connected to both ends of the protective component.

The present embodiment exemplifies the case in which in addition to the fixing holes 25 formed at both ends of the protective component 24, the fixing holes 26 are formed approximately in the middle of the protective component 24; and the positions and the number of the fixing holes may be selected as appropriate depending on the size, the number, the structure and the like of the battery modules fastened to the protective component.

The protective component 24 further includes fastening holes 27 located outward of the fixing holes 26 and used for fastening the protective component to the bracket 17; and the positional relationship between the fixing holes 26 and the fastening holes 27 is not limited to this.

The battery module 100 is formed by stacking multiple battery cells.

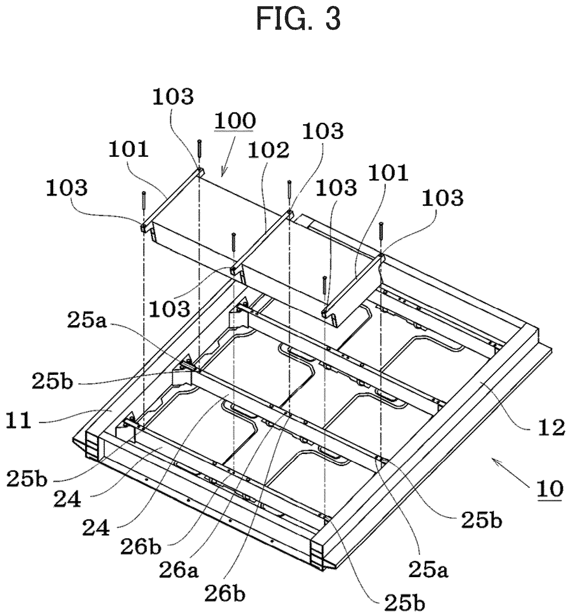

At both ends in the stacking direction of the battery cells, guard members 101, 101 are arranged in the left-right direction as illustrated in FIG. 3, for example.

This pair of guard members protects the plurality of battery cells and the guard members 101 are fixed to the strength members 20.

In the present embodiment, it is exemplified that an intermediate fixing member 102 is further arranged approximately in the middle between the guard members 101, 101; however, there is no limitation to this structure.

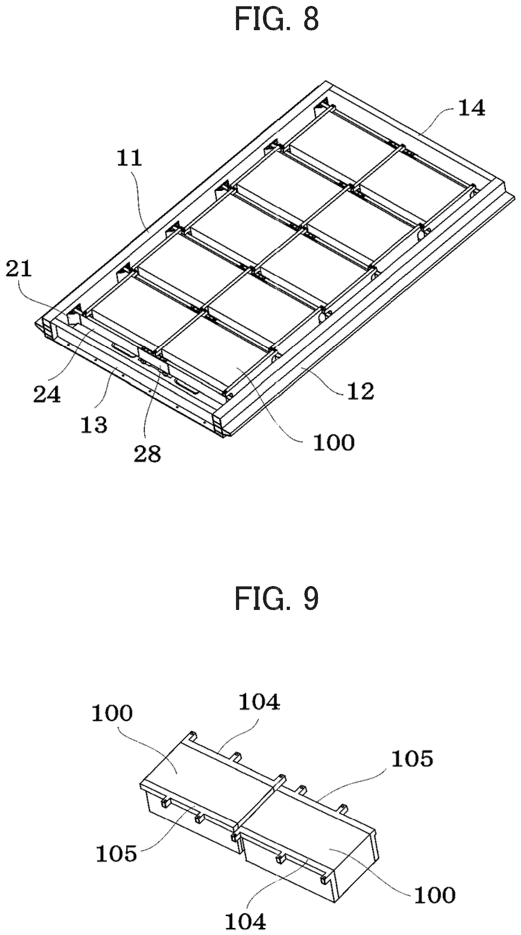

The plurality of battery cells may be stacked in the front-rear direction, and in this case, it is preferable to arrange guard members 104, 105 respectively at both ends in the front-rear direction of the battery cells, as illustrated in FIG. 9.

The guard members 101, 104, 105 and the intermediate fixing member 102 are each formed with fixing holes 103 respectively at the front and rear ends of these members so as to be fixable to the fixing holes 25, 26 of the strength members 20 with bolts.

A specific example of fixing the battery module will be described with reference to FIGS. 1, 3.

As illustrated in FIG. 3, each single protective component 24 (strength member 20) includes: a left fixing hole 25a and a right fixing hole 25b respectively at both ends of the protective component; and a left fixing hole 26a and a right fixing hole 26b approximately in the middle of the protective component; and each single battery module 100 is disposed between the protective components 24, 24 mutually adjacent in the front-rear direction.

For example, the guard member 101 and the intermediate fixing member 102 of the battery module 100 disposed in the frontmost row are fixed with bolts respectively to the right fixing holes 25b, 26b included in respective two protective components 24, 24.

Next, as illustrated in FIG. 1, a guard member 101a and an intermediate fixing member 102a of a battery module 100a arranged in the second front row are fixed respectively to the left fixing holes 25a, 26a of the protective components 24.

Accordingly, the battery modules 100, 100a are aligned in the front-rear direction via one protective component 24 (the strength member 20) therebetween.

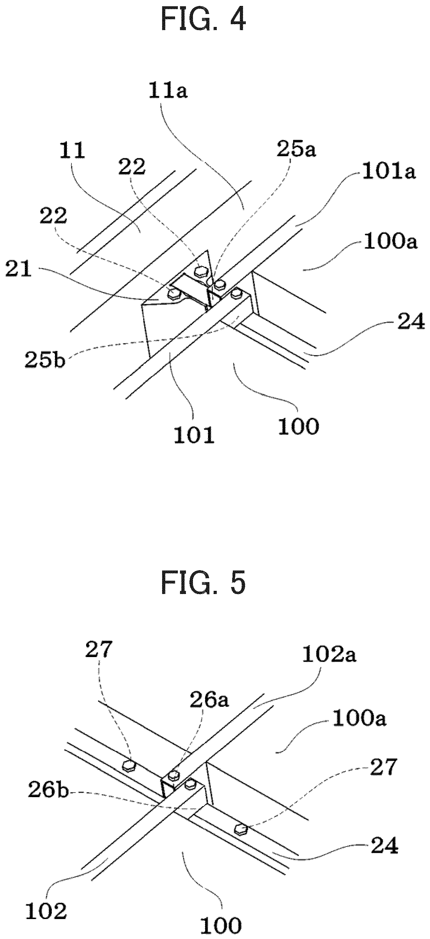

In this case, as illustrated in FIGS. 4, 5, the guard members 101, 101a and the intermediate fixing members 102, 102a are fixed to be staggered left and right, respectively, with respect to one protective component 24.

For example, a load input from the left frame 11 side is transmitted via the terminal component 21 to the protective component 24, and further transmitted via the terminal component 21 joined to the right side of the protective component 24 to the right frame 12.

At this time, since the strength members 20 are also connected to the front and rear guard members 101, 101a and the panel body 15, the input load is distributed across the entire battery case and thereby the battery module is protected.

In addition, even when a load is applied so as to bend the left frame, the guard members 101, 101a are connected to extend across the strength members 20, 20 adjacent to each other in the front-rear direction; therefore, the strength members 20 are prevented from falling in the front-rear direction.

The present embodiment exemplifies the case in which four strength members 20 are connected and three battery modules 100 are fixed inside the battery case 10; however, the number of them is not limited.

In addition, a plurality of battery modules 100 may be fixed in the left-right direction.

FIG. 8 illustrates the second embodiment.

The present embodiment exemplifies the case in which the protective component 24 of each strength member 20 includes a plurality of parts.

A connecting component 28 made of the same or similar aluminum extruded material as that of the protective component is joined to approximately the middle portion of the protective component 24 through joining without dissimilar materials; however, the number of connecting components, the connecting positions, etc., are not limited.

In the present embodiment, since the frame-shaped frame body configuring the battery case, the panel body disposed on the bottom of the frame body, and the strength members are respectively coupled by using fastening members, such as bolts, screws, and rivets, disassembling at the time of recycling is facilitated; and in this case, since the strength members are made of the same material and formed into an integral structure through joining without dissimilar materials, the disassembled strength members can be reused as resources as they are.

### INDUSTRIAL APPLICABILITY

The battery case structure according to the invention is applicable to the case in which a battery is mounted in a vehicle, and has not only high battery protection effect but also excellent recyclability.

### REFERENCE SIGNS LIST

- 10: battery case
- 11: left frame
- 12: right frame
- 13: front frame
- 14: rear frame
- 15: panel body
- 20: strength member
- 21: terminal component
- 24: protective component
- 100: battery module
- 101: guard member

## Claims

1. An in-vehicle battery case structure comprising:
a battery case (10) configured to be mounted in a vehicle; and
a plurality of strength members (20) fastened to an inner side of the battery case (10),
the strength members (20) being configured to hold a battery module (100),
**characterised in that**
each of the strength members (20) are detachably fastened to the battery case (10), and are configured by a plurality of components that are joined through joining without dissimilar materials,
the battery case (10) includes: a frame body configured by a left frame (11), a right frame (12), a front frame (13), and a rear frame (14); and a panel body (15) disposed on a bottom of the frame body,
each of the strength members (20) includes a protective component (24) and terminal components (21) that are joined to both ends of the protective component (24), and is fastened to the left frame (11) and the right frame (12) by the terminal components (21),
each of the strength members (20) is formed by joining the terminal components (21) made of aluminum to the protective component (24) made of the same or similar aluminum extruded material through friction stir welding, and
the battery module (100) is fixed to the protective component (24) with bolts.

2. The in-vehicle battery case structure according to claim 1, wherein
the panel body (15) includes a plurality of brackets (17), and
the protective component (24) is fastened to the brackets (17) with bolts.

3. The in-vehicle battery case structure according to claim 2, comprising guard members (101) at both ends in a stacking direction of a plurality of stacked battery cells provided in the battery module (100), and
wherein the guard members (101) are fixed to two protective components (24) adjacent in a direction perpendicular to the stacking direction.

4. The in-vehicle battery case structure according to claim 3, wherein
in a case that a plurality of battery modules (100) are arranged in a front-rear direction in the battery case (10), two guard members (101) for fixing two battery modules (100) adjacent in the front-rear direction are fixed to be staggered left and right with respect to the same protective component (24).

## Patentansprüche

1. Batteriegehäusestruktur im Fahrzeug, aufweisend:
ein Batteriegehäuse (10), das ausgebildet ist, um in einem Fahrzeug montiert zu werden, und
mehrere Verstärkungsglieder (20), die an einer Innenseite des Batteriegehäuses (10) befestigt sind,
wobei die Verstärkungsglieder (20) ausgebildet sind, ein Batteriemodul (100) zu halten,
**dadurch gekennzeichnet, dass**
jedes der Verstärkungsglieder (20) ist lösbar am Batteriegehäuse (10) befestigt, und ist durch mehrere Bauteile ausgebildet ist, welche durch Fügen ohne unähnliche Materialien verbunden sind,
dass das Batteriegehäuse (10) umfasst:
einen Rahmenkörper, der durch einen linken Rahmen (11), einen rechten Rahmen (12), einen vorderen Rahmen (13) und einen hinteren Rahmen (14) ausgebildet ist; und
einen, auf der Unterseite des Rahmenkörpers angeordneten Paneelenkörper (15),
dass jedes der Verstärkungsglieder (20) ein Schutzbauteil (24) und Endbauteile (21) umfasst, welche an beiden Enden des Schutzbauteils (24) verbunden sind, und an dem linken Rahmen (11) und dem rechten Rahmen (12) durch die Endbauteile (21) befestigt ist,
dass jedes der Verstärkungsglieder (20) durch Verbinden der Endbauteile (21), welche aus Aluminium hergestellt sind, mit dem Schutzbauteil (24), welches aus demselben oder einem ähnlichen Aluminium hergestellt ist, welches ein stranggepresstes Material ist, durch Rührreibschweißen gebildet ist, und
dass das Batteriemodul (100) mit Bolzen an dem Schutzbauteil (24) befestigt ist.

2. Batteriegehäusestruktur im Fahrzeug nach Anspruch 1,
wobei
der Plattenkörper (15) mehrere Klammern (17) umfasst, und
das Schutzbauteil (24) mit Bolzen an den Klammern (17) befestigt ist.

3. Batteriegehäusestruktur im Fahrzeug nach Anspruch 2, umfassend
die Sicherungsglieder (101) an beiden Enden in einer Stapel-Richtung von einer Vielzahl von gestapelten Batteriezellen aufweist, welche im Batteriemodul (100) vorgesehen sind, und
wobei die Sicherungsglieder (101) an zwei Schutzbauteilen (24) befestigt sind, welche benachbart in einer Richtung senkrecht zu der Stapel-Richtung sind.

4. Batteriegehäusestruktur im Fahrzeug nach Anspruch 3,
wobei
für den Fall, dass mehrere Batteriemodule (100) in vorwärts-rückwärts Richtung im Batteriegehäuse angeordnet sind, zwei Sicherungsglieder (101) zum Befestigen zweier Batteriemodule (100), benachbart zu der vorwärts-rückwärts Richtung, befestigt sind, um, in Bezug auf dasselbe Schutzbauteil (24) links und rechts gestaffelt zu sein.

## Revendications

1. Structure de boîtier de batterie embarquée comprenant :
un boîtier de batterie (10) configuré pour être monté dans un véhicule ;
et
une pluralité d'éléments de renforcement (20) fixés sur un côté intérieur du boîtier de batterie (10),
les éléments de renforcement (20) étant configurés pour maintenir un module de batterie (100),
**caractérisée en ce que**
chacun des éléments de renforcement (20) est fixé de manière amovible au boîtier de batterie (10), et est constitué d'une pluralité de composants assemblés par jonction sans matériaux dissemblables,
le boîtier de batterie (10) comprend : un corps de cadre constitué d'un cadre gauche (11), d'un cadre droit (12), d'un cadre avant (13) et d'un cadre arrière (14) ; et un corps de panneau (15) disposé au fond du corps de cadre,
chacun des éléments de renforcement (20) comprend un composant de protection (24) et des composants terminaux (21) assemblés aux deux extrémités du composant de protection (24), et est fixé au cadre gauche (11) et au cadre droit (12) par les composants terminaux (21),
chacun des éléments de renforcement (20) est formé en assemblant les composants terminaux (21) en aluminium au composant de protection (24) en un matériau extrudé d'aluminium identique ou similaire par soudage par friction-malaxage, et
le module de batterie (100) est fixé au composant de protection (24) par des boulons.

2. Structure de boîtier de batterie embarquée selon la revendication 1, dans laquelle
le corps de panneau (15) comprend une pluralité de supports (17), et
le composant de protection (24) est fixé aux supports (17) par des boulons.

3. Structure de boîtier de batterie embarquée selon la revendication 2, comprenant des éléments de garde (101) aux deux extrémités, dans une direction d'empilement, d'une pluralité de cellules de batterie empilées prévues dans le module de batterie (100), et
dans laquelle les éléments de garde (101) sont fixés à deux composants de protection (24) adjacents dans une direction perpendiculaire à la direction d'empilement.

4. Structure de boîtier de batterie embarquée selon la revendication 3, dans laquelle,
dans le cas où une pluralité de modules de batterie (100) sont disposés dans une direction avant-arrière dans le boîtier de batterie (10), deux éléments de garde (101) destinés à fixer deux modules de batterie (100) adjacents dans la direction avant-arrière sont fixés de manière décalée à gauche et à droite par rapport au même composant de protection (24).
